# EUROPEAN PATENT APPLICATION

(11) **EP 4 557 789 A1**
(43) Date of publication of application: **21.05.2025**
(21) Application number: 23851301.4
(22) Date of filing: 16.05.2023
(51) Int. Cl.: H04W 8/26

(54) **COMMUNICATION METHOD, APPARATUS AND SYSTEM**

(30) Priority: 11.08.2022 CN 202210963775
(71) Applicant: Huawei Technologies Co., Ltd., Shenzhen, Guangdong 518129 (CN)
(72) Inventor: ZHU, Yuanping, Shenzhen, Guangdong 518129 (CN); OLOFSSON, Henrik, Shenzhen, Guangdong 518129 (CN); YANG, Xudong, Shenzhen, Guangdong 518129 (CN); SUN, Fei, Shenzhen, Guangdong 518129 (CN)
(74) Representative: Gill Jennings & Every LLP
(86) International application number: PCT/CN2023/094441
(87) International publication number: WO 2024/032071

(57) **Abstract**

This application provides a communication method, apparatus, and system. The method includes: A first device receives a first list from a first network device, where the first list includes information about N first cells, the information about the first cell includes a physical cell identifier of the first cell, the information about the N first cells is in one-to-one correspondence with the N first cells, the first cell is a cell served by the first network device or a second network device, the second network device is a neighboring network device of the first network device, the first device is a distributed unit of a base station, the first network device is a central unit of the base station, and N is an integer greater than or equal to 1; and the first device determines, based on the first list, first identification information that is not included in the first list, where the first identification information indicates a cell served by the first device. In embodiments of this application, a physical cell identifier of the cell served by the first device is determined based on the physical cell identifier of the first cell, to avoid a physical cell identifier conflict.

## Description

This application claims priority to Chinese Patent Application No. 202210963775.3, filed with the China National Intellectual Property Administration on August 11, 2022 and entitled "COMMUNICATION METHOD, APPARATUS, AND SYSTEM", which is incorporated herein by reference in its entirety.

### TECHNICAL FIELD

This application relates to the communications field, and more specifically, to a method, an apparatus, and a system for selecting an identifier of a serving cell.

### BACKGROUND

An integrated access and backhaul (integrated access and backhaul, IAB) technology is introduced to a 5G system. According to the technology, both access links (access link) and backhaul links (backhaul link) of IAB nodes (IAB node) use wireless transmission solutions, to avoid fiber deployment. The IAB nodes may be fixedly deployed, or may be deployed on mobile vehicles such as buses, cars, trains, or ships. The IAB nodes that can move with the vehicles may be referred to as mobile IAB nodes (mobile IAB node) or vehicle-mounted relays (vehicle-mounted relay, VMR).

Currently, a physical cell identifier (physical cell identifier, PCI) of a cell served by the IAB node may be configured by an operation, administration, and maintenance (operation, administration, and maintenance, OAM) network element, and a conflict between a PCI of a cell and a PCI of a neighboring cell may be avoided through proper network planning and configuration. However, in a moving process of the mobile IAB node, a PCI originally configured for a cell served by the mobile IAB node may conflict with a PCI of a surrounding cell.

In this case, how to avoid a conflict between a PCI of a cell served by a mobile IAB node and a PCI of a surrounding cell becomes a problem that needs to be urgently resolved in the industry.

### SUMMARY

This application provides a communication method, so that an identifier of a serving cell can be selected, to avoid a conflict with an identifier of another surrounding cell.

According to a first aspect, a communication method is provided, applied to a first device and including: receiving a first list from a first network device, where the first list includes information about N first cells, the information about the N first cells is in one-to-one correspondence with the N first cells, information about each first cell includes a physical cell identifier of the first cell, the first cell is a cell served by the first network device or a second network device, the second network device is a neighboring network device of the first network device, the first device is a distributed unit of a base station, the first network device is a central unit of the base station, and N is an integer greater than or equal to 1; and determining first identification information based on the first list, where the first identification information indicates a cell served by the first device, and the first identification information is not included in the first list.

In this application, the cell served by the first network device and the cell served by the second network device may be configured for the first device in one list, or may be configured for the first device in two different lists. This is not limited in this application.

It should be noted that, in this application, that the second network device is a neighboring network device of the first network device means that the second network device may include a neighboring base station of the first network device, and may further include a central unit of the neighboring base station of the first network device.

In a possible implementation, the second network device may further include a neighboring base station of a neighbor of the first network device and/or a central unit of the neighboring base station of the neighbor of the first network device.

In embodiments of this application, the first device may obtain a physical cell identifier of a surrounding cell of the first network device, and determine, for the cell served by the first device, identification information that is different from the physical cell identifier of the surrounding cell of the first network device, to avoid a conflict between an identifier of the cell served by the first device and an identifier of another surrounding cell of the first network device, thereby avoiding strong interference to the surrounding cell of the first network device, and ensuring that a service of a terminal device is not affected.

With reference to the first aspect, in some implementations of the first aspect, the first device is a distributed unit of a mobile IAB node, and the first network device is a central unit of a donor base station of the mobile IAB node.

In embodiments of this application, the mobile IAB node can be prevented from selecting an identifier that is the same as that of a surrounding cell, thereby avoiding strong interference to the surrounding cell.

With reference to the first aspect, in some implementations of the first aspect, the information about the first cell further includes at least one of the following: a cell global identifier of the first cell, a tracking area code of the first cell, a radio access network area code of the first cell, or a public land mobile network list of the first cell.

With reference to the first aspect, in some implementations of the first aspect, the first identification information includes a physical cell identifier of the cell served by the first device.

In embodiments of this application, the first device selects, for a serving cell, a physical cell identifier that is different from that of a surrounding cell, thereby avoiding strong interference to the surrounding cell, and ensuring normal execution of a service of the terminal device.

With reference to the first aspect, in some implementations of the first aspect, the determining first identification information based on the first list includes: obtaining a second list, where the second list includes one or more pieces of identification information that are capable of being used by the first device; and selecting the first identification information from the second list, where the first identification information is not included in the first list.

In embodiments of this application, one or more pieces of available identification information may be pre-configured in the first device, and the first device determines, from the pre-configured identification information, identification information that is different from that of a surrounding cell. This can reduce a selection range of the first device, and improve selection efficiency.

With reference to the first aspect, in some implementations of the first aspect, the determining first identification information based on the first list includes: obtaining a third list, where the third list includes one or more pieces of identification information that are incapable of being used by the first device; and determining the first identification information, where the first identification information is neither included in the third list nor included in the first list.

In embodiments of this application, one or more pieces of unavailable identification information may be pre-configured in the first device. The identification information determined by the first device is different from the identification information of the surrounding cell. This can avoid unavailability of the identification information, and improve efficiency of selecting proper identification information for the first device.

With reference to the first aspect, in some implementations of the first aspect, the information about the first cell further indicates a type of a device serving the first cell.

With reference to the first aspect, in some implementations of the first aspect, the type of the device serving the first cell includes at least one of the following: a mobile IAB node, a fixed IAB node, and a fixed base station.

According to a second aspect, a communication method is provided, applied to a first network device and including: obtaining information about N first cells, where the information about the N first cells is in one-to-one correspondence with the N first cells, information about each first cell includes a physical cell identifier of the first cell, the first cell is a cell served by the first network device or a second network device, the second network device is a neighboring network device of the first network device, and N is an integer greater than or equal to 1; and sending a first list to a first device, where the first list includes the information about the N first cells, the first device is a distributed unit of a base station, and the first network device is a central unit of the base station.

In embodiments of this application, the first network device may obtain a physical cell identifier of a surrounding cell of the first network device and send the physical cell identifier to the first device, to avoid a conflict between an identifier of a cell served by the first device and an identifier of another surrounding cell of the first network device, thereby avoiding strong interference to the surrounding cell of the first network device, and ensuring that a service of a terminal device is not affected.

With reference to the second aspect, in some implementations of the second aspect, the first device is a distributed unit of a mobile IAB node, and the first network device is a central unit of a donor base station of the mobile IAB node.

In embodiments of this application, the IAB node can be prevented from selecting an identifier that is the same as that of a surrounding cell, thereby avoiding strong interference to the surrounding cell.

With reference to the second aspect, in some implementations of the second aspect, the information about the first cell further includes at least one of the following: a cell global identifier of the first cell, a tracking area code of the first cell, a radio access network area code of the first cell, or a public land mobile network list of the first cell.

With reference to the second aspect, in some implementations of the second aspect, the information about the first cell further indicates a type of a device serving the first cell.

With reference to the second aspect, in some implementations of the second aspect, the type of the device serving the first cell includes at least one of the following: a mobile IAB node, a fixed IAB node, and a fixed base station.

According to a third aspect, a communication method is provided, applied to a first device and including:
sending first identification information to a first network device, where the first identification information indicates a cell served by the first device, the first device is a distributed unit of a base station, and the first network device is a central unit of the base station; sending a second identification information list to the first network device, where the second identification information list includes one or more pieces of second identification information, each piece of second identification information corresponds to one neighboring cell detected by the first device, and the second identification information includes a physical cell identifier of the neighboring cell detected by the first device; receiving a third identification information list from the first network device, where the third identification information list includes one or more pieces of third identification information; and replacing identification information of the cell indicated by the first identification information with one piece of third identification information in the third identification information list.

In embodiments of this application, the first device sends, to the first network device, an identifier of the cell served by the first device and an identifier of the neighboring cell detected by the first device, so that the first network device reconfigures a cell identifier for the first device, thereby avoiding interference caused by a conflict between the first device and a surrounding cell.

With reference to the third aspect, in some implementations of the third aspect, the first device is a distributed unit of a mobile IAB node, and the first network device is a central unit of a donor base station of the mobile IAB node.

In embodiments of this application, the IAB node can be prevented from selecting an identifier that is the same as an identifier of a surrounding cell of the donor base station of the IAB node, thereby avoiding strong interference to the surrounding cell of the donor base station of the IAB node.

With reference to the third aspect, in some implementations of the third aspect, the first identification information and the second identification information include a physical cell identifier of the cell served by the first device.

According to a fourth aspect, a communication method is provided, applied to a first network device and including: receiving first identification information from a first device, where the first identification information indicates a cell served by the first device, and the first device is a distributed unit of a base station; receiving a second identification information list from the first device, where the second identification information list includes one or more pieces of second identification information, each piece of second identification information corresponds to one neighboring cell detected by the first device, and the second identification information includes a physical cell identifier of the neighboring cell detected by the first device; obtaining a first list, where the first list includes information about N first cells, the information about the N first cells is in one-to-one correspondence with the N first cells, information about each first cell includes a physical cell identifier of the first cell, the first cell is a cell served by the first network device or a second network device, the second network device is a neighboring network device of the first network device, the first network device is a central unit of the base station, and N is an integer greater than or equal to 1; determining a third identification information list based on the first list, the second identification information list, and the first identification information; and sending the third identification information list to the first device, where the third identification information list includes one or more pieces of third identification information, and the one or more pieces of third identification information identify the cell served by the first device.

In embodiments of this application, the first network device detects, based on identification information of the first device, information about the neighboring cell detected by the first device, and obtained neighboring cell information, whether there is a possibility of a cell identifier conflict, and reconfigures a cell identifier for the first device, so that interference caused by a cell identifier conflict between the first device and a surrounding cell of the first network device can be avoided.

With reference to the fourth aspect, in some implementations of the fourth aspect, the first device is a distributed unit of a mobile IAB node, and the first network device is a central unit of a donor base station of the mobile IAB node.

In embodiments of this application, the base station may detect, based on obtained neighboring cell information, information about a cell served by the mobile IAB node, and information about a neighboring cell detected by the mobile IAB node, whether there is a possibility of a conflict, and reconfigure a cell identifier for the IAB node, so that interference caused by an identifier of the cell served by the IAB node to a surrounding cell is avoided.

With reference to the fourth aspect, in some implementations of the fourth aspect, the information about the first cell further includes at least one of the following: a cell global identifier of the first cell, a tracking area code of the first cell, a radio access network area code of the first cell, or a public land mobile network list of the first cell.

With reference to the fourth aspect, in some implementations of the fourth aspect, the first identification information and the third identification information include a physical cell identifier of the cell served by the first device.

With reference to the fourth aspect, in some implementations of the fourth aspect, the determining a third identification information list based on the first list, the second identification information list, and the first identification information includes: if the first identification information is included in the first list or the second identification information list, the first network device determines the third identification information list for the first device, where the third identification information in the third identification information list is not included in the first list or the second identification information list.

With reference to the fourth aspect, in some implementations of the fourth aspect, the information about the first cell further indicates a type of a device serving the first cell.

With reference to the fourth aspect, in some implementations of the fourth aspect, the type of the device serving the first cell includes at least one of the following: a mobile IAB node, a fixed IAB node, and a fixed base station.

According to a fifth aspect, a communication apparatus is provided, including: a transceiver unit, configured to receive a first list from a first network device, where the first list includes information about N first cells, the information about the N first cells is in one-to-one correspondence with the N first cells, information about each first cell includes a physical cell identifier of the first cell, the first cell is a cell served by the first network device or a second network device, the second network device is a neighboring network device of the first network device, the communication apparatus is a distributed unit of a base station, and the first network device is a central unit of the base station, and N is an integer greater than or equal to 1; and a processing unit, configured to determine first identification information based on the first list, where the first identification information indicates a cell served by the communication apparatus, and the first identification information is not included in the first list.

With reference to the fifth aspect, in some implementations of the fifth aspect, the communication apparatus is a distributed unit of a mobile **IAB** node, and the first network device is a central unit of a donor base station of the mobile IAB node.

With reference to the fifth aspect, in some implementations of the fifth aspect, the information about the first cell further includes at least one of the following: a cell global identifier of the first cell, a tracking area code of the first cell, a radio access network area code of the first cell, or a public land mobile network list of the first cell.

With reference to the fifth aspect, in some implementations of the fifth aspect, the first identification information includes a physical cell identifier of the cell served by the communication apparatus.

With reference to the fifth aspect, in some implementations of the fifth aspect, the determining first identification information based on the first list includes: obtaining a second list, where the second list includes one or more pieces of identification information that are capable of being used by the communication apparatus; and selecting the first identification information from the second list, where the first identification information is not included in the first list.

With reference to the fifth aspect, in some implementations of the fifth aspect, the determining first identification information based on the first list includes: obtaining a third list, where the third list includes one or more pieces of identification information that are incapable of being used by the communication apparatus; and determining the first identification information, where the first identification information is neither included in the third list nor included in the first list.

With reference to the fifth aspect, in some implementations of the fifth aspect, the information about the first cell further indicates a type of a device serving the first cell.

With reference to the fifth aspect, in some implementations of the fifth aspect, the type of the device serving the first cell includes at least one of the following: a mobile IAB node, a fixed IAB node, and a fixed base station.

According to a sixth aspect, a communication apparatus is provided, including: a transceiver unit, configured to obtain information about N first cells, where the information about the N first cells is in one-to-one correspondence with the N first cells, information about each first cell includes a physical cell identifier of the first cell, the first cell is a cell served by the communication apparatus or a second network device, the second network device is a neighboring network device of the communication apparatus, and N is an integer greater than or equal to 1, and the transceiver unit, further configured to send a first list to a first device, where the first list includes the information about the N first cells, the first device is a distributed unit of a base station, and the communication apparatus is a central unit of the base station.

With reference to the sixth aspect, in some implementations of the sixth aspect, the communication apparatus is a central unit of a donor base station of a mobile IAB node, and the first device is a distributed unit of the mobile IAB node.

With reference to the sixth aspect, in some implementations of the sixth aspect, the information about the first cell further includes at least one of the following: a cell global identifier of the first cell, a tracking area code of the first cell, a radio access network area code of the first cell, or a public land mobile network list of the first cell.

With reference to the sixth aspect, in some implementations of the sixth aspect, the information about the first cell further indicates a type of a device serving the first cell.

With reference to the sixth aspect, in some implementations of the sixth aspect, the type of the device serving the first cell includes at least one of the following: a mobile IAB node, a fixed IAB node, and a fixed base station.

According to a seventh aspect, a communication apparatus is provided, including: a transceiver unit, configured to send first identification information to a first network device, where the first identification information indicates a cell served by the communication apparatus; the transceiver unit, further configured to send a second identification information list to the first network device, where the second identification information list includes one or more pieces of second identification information, each piece of second identification information corresponds to one neighboring cell detected by the first device, and the second identification information includes a physical cell identifier of the neighboring cell detected by the first device; the transceiver unit, further configured to receive a third identification information list from the first network device, where the third identification information list includes one or more pieces of third identification information; and a processing unit, configured to replace identification information of the cell indicated by the first identification information with one piece of third identification information in the third identification information list.

With reference to the seventh aspect, in some implementations of the seventh aspect, the communication apparatus is a distributed unit of a mobile IAB node, and the first network device is a central unit of a donor base station of the mobile IAB node.

With reference to the seventh aspect, in some implementations of the seventh aspect, the first identification information and the third identification information include a physical cell identifier of the cell served by the communication apparatus.

According to an eighth aspect, a communication method is provided, including: a transceiver unit, configured to receive first identification information from a first device, where the first identification information indicates a cell served by the first device, and the first device is a distributed unit of a base station; the transceiver unit, further configured to receive a second identification information list from the first device, where the second identification information list includes one or more pieces of second identification information, each piece of second identification information corresponds to one neighboring cell detected by the first device, and the second identification information includes a physical cell identifier of the neighboring cell detected by the first device; the transceiver unit, further configured to obtain a first list, where the first list includes information about N first cells, the information about the N first cells is in one-to-one correspondence with the N first cells, information about each first cell includes a physical cell identifier of the first cell, the first cell is a cell served by the communication apparatus or a second network device, the second network device is a neighboring network device of the communication apparatus, the communication apparatus is a central unit of a base station, and N is an integer greater than or equal to 1; a processing unit, configured to determine a third identification information list based on the first list, the second identification information list, and the first identification information; and the transceiver unit, further configured to send the third identification information list to the first device, where the third identification information list includes one or more pieces of third identification information, and the one or more pieces of third identification information identify the cell served by the first device.

With reference to the eighth aspect, in some implementations of the eighth aspect, the communication apparatus is a central unit of a donor base station of a mobile IAB node, and the first device is a distributed unit of the mobile IAB node.

With reference to the eighth aspect, in some implementations of the eighth aspect, the information about the first cell further includes at least one of the following: a cell global identifier of the first cell, a tracking area code of the first cell, a radio access network area code of the first cell, or a public land mobile network list of the first cell.

With reference to the eighth aspect, in some implementations of the eighth aspect, the first identification information and the third identification information include a physical cell identifier of the cell served by the first device.

With reference to the eighth aspect, in some implementations of the eighth aspect, the determining a third identification information list based on the first list, the second identification information list, and the first identification information includes: if the first identification information is included in the first list or the second identification information list, the first network device determines the third identification information list for the first device, where third identification information in the third identification information list is not included in the first list or the second identification information list.

With reference to the eighth aspect, in some implementations of the eighth aspect, the information about the first cell further indicates a type of a device serving the first cell.

With reference to the eighth aspect, in some implementations of the eighth aspect, the type of the device serving the first cell includes at least one of the following: a mobile IAB node, a fixed IAB node, and a fixed base station.

According to a ninth aspect, a communication apparatus is provided, including a processor, configured to execute a computer program stored in a memory, so that the communication apparatus performs the communication method according to any one of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

According to a tenth aspect, a communication system is provided, including at least one of the foregoing first device and second network device.

According to an eleventh aspect, a chip is provided, including: a processor, configured to invoke a computer program from a memory and run the computer program, so that a communication device on which the chip is installed performs the communication method according to any one of the first aspect to the sixth aspect.

According to a twelfth aspect, a computer program is provided. When the computer program is executed by a communication apparatus, the communication method according to any one of the first aspect to the sixth aspect is implemented.

According to a thirteenth aspect, a computer-readable storage medium is provided. The computer-readable storage medium stores a computer program; and when the computer program is run on a computer, the computer is enabled to perform the communication method according to any one of the first aspect to the sixth aspect.

### BRIEF DESCRIPTION OF DRAWINGS

FIG. 1 is a diagram of an application scenario according to an embodiment of this application;
FIG. 2 is a diagram of an IAB network user plane protocol stack architecture according to this application;
FIG. 3 is a diagram of an IAB network control plane protocol stack architecture according to this application;
FIG. 4 is a schematic flowchart of a method 400 according to an embodiment of this application;
FIG. 5 is a schematic flowchart of a method 500 according to an embodiment of this application;
FIG. 6 is a schematic flowchart of a method 600 according to an embodiment of this application;
FIG. 7 is a diagram of a communication apparatus 10 according to an embodiment of this application; and
FIG. 8 is a diagram of a communication apparatus 20 according to an embodiment of this application.

### DESCRIPTION OF EMBODIMENTS

The following describes technical solutions of embodiments in this application with reference to the accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, new radio (new radio, NR), a fixed-mobile convergence network system, or a future 6th generation (6th generation, 6G) system.

The terminal device in embodiments of this application may also be referred to as a user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a device configured to communicate with a terminal device. The network device may be a base station (base transceiver station, BTS) in a global system for mobile communications (global system for mobile communications, GSM) or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in a future evolved PLMN, or the like. This is not limited in embodiments of this application.

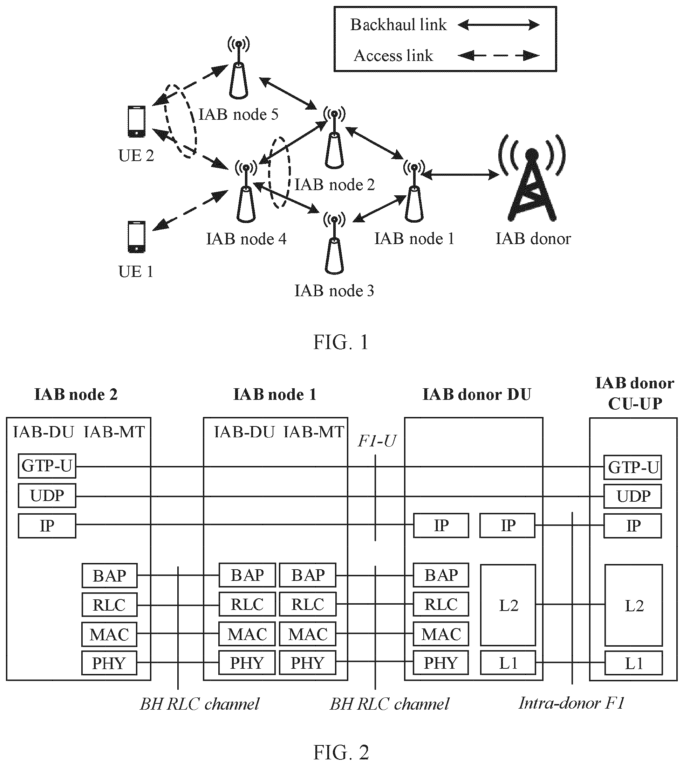

FIG. 1 is a diagram of an application scenario according to an embodiment of this application. As shown in FIG. 1, in embodiments of this application, an IAB node may provide a radio access service for a user equipment (user equipment, UE), and service data of the UE is transmitted to an IAB donor (IAB donor) via the IAB node through a wireless backhaul link. The IAB node may include a mobile terminal (mobile terminal, MT) part and a distributed unit (distributed unit, DU) part, where the MT part of the IAB node has some or all functions of the UE. When facing a parent node of the IAB node, the IAB node may be regarded as a terminal device, that is, a role of the MT. When facing a child node of the IAB (the child node may be another IAB node or common UE), the IAB is regarded as a network device, that is, a role of the DU.

In embodiments of this application, the IAB donor may also be referred to as a donor node (donor node) or a donor base station (donor gNodeB, DgNB). The IAB donor is connected to a core network (for example, connected to a 5G core network or a 5GC) element serving the UE, and provides a wireless backhaul function for the IAB node.

It should be noted that the IAB donor may be an access network element having a complete base station function, or may be an access network element with a central unit (central unit, CU) and a distributed unit (distributed unit, DU) separated. For ease of description, the donor base station refers to the central unit of the donor node as an IAB donor CU (or directly referred to as a CU) for short, and refers to the distributed unit of the donor node as an IAB donor DU for short, where the donor CU may be a form in which a control plane (control plane, CP) and a user plane (user plane, UP) are separated, for example, the CU may include one CU-CP and one (or more) CU-UP(s).

In an IAB network, multi-hop networking can be used to improve network coverage performance, multi-connection networking can be used to improve service transmission reliability, or multi-hop networking and multi-connection networking can be combined to balance network coverage performance and service transmission reliability.

Between a UE served by an IAB node and an IAB donor, there is at least one transmission path including a plurality of links. One transmission path may include a UE, one or more IAB nodes, and an IAB donor. If the IAB donor is in a form in which a CU and a DU are separated, the transmission path may further include an IAB-donor-DU part and an IAB-donor-CU part. Each IAB node considers a neighboring node that provides access and backhaul services for the IAB node as a parent node. Correspondingly, each IAB node may be regarded as a child node of the parent node of the IAB node.

In the IAB network, a backhaul adaptation protocol (backhaul adaptation protocol, BAP) layer is introduced to a wireless backhaul link. The protocol layer is above an RLC layer, and may be used to implement functions such as routing of a data packet on the wireless backhaul link and bearer mapping.

An RRC connection may be established between the MT part of the IAB node and the donor node (which may be specifically the IAB-donor-CU). The donor node may alternatively send an RRC message to the IAB-MT through the RRC connection, or may receive an RRC message from the IAB-MT, to perform a function related to radio resource management.

An F1 interface (or referred to as an F1* interface, which may be collectively referred to as an F1 interface in this application, but the name is not limited) needs to be established between the DU part of the IAB node (the IAB-DU part) and the donor node (which may be specifically the IAB-donor-CU). The interface supports a user plane protocol (F1-U/F1*-U) and a control plane protocol (F1-C/F1*-C).

As shown in FIG. 2, a diagram of an IAB network user plane protocol stack architecture, the user plane protocol includes one or more of the following protocol layers: general packet radio service (general packet radio service, GPRS) tunneling protocol user plane (GPRS tunneling protocol user plane, GTP-U), user datagram protocol (user datagram protocol, UDP), and internet protocol (internet protocol, IP).

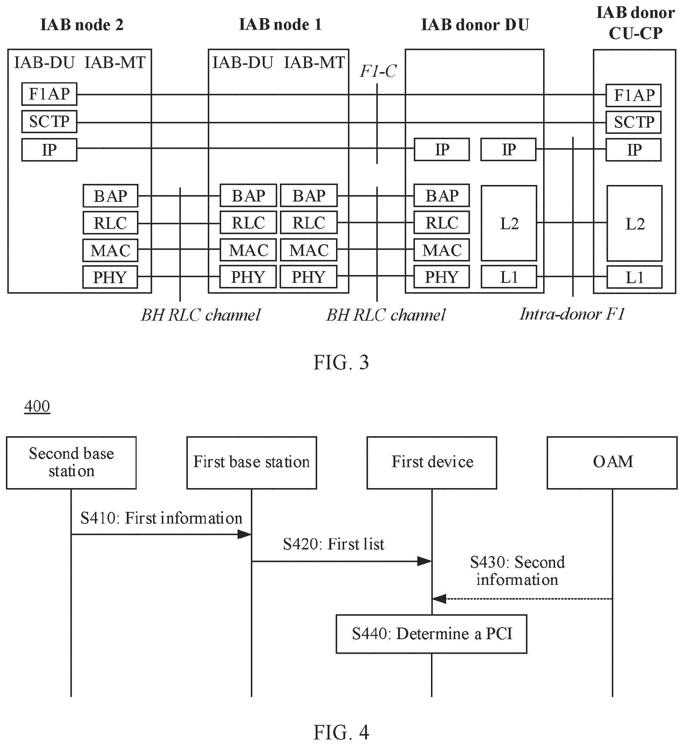

As shown in FIG. 3, a diagram of an IAB network control plane protocol stack architecture, the control plane protocol of the interface includes one or more of the following: an F1 application protocol (F1 application protocol, F1AP), a stream control transport protocol (stream control transport protocol, SCTP), and an IP. Through the control plane of the F1/F1* interface, interface management, IAB-DU management, UE context related configuration, and the like may be performed between the IAB node and the IAB donor. Through the user plane of the F1/F1* interface, functions such as user plane data transmission and downlink transmission status feedback may be performed between the IAB node and the IAB donor.

In embodiments of this application, a first device may be a distributed unit of a base station, and a network device may be a central unit of the base station or a control plane part of the central unit of the base station (gNB-CU-CP). Further, the first device may be an IAB node or a distributed unit of the IAB node, and a first network device may be a donor base station of the first device, or may be a central unit of the donor base station of the first device or a CU-CP of the donor base station of the first device. Still further, the first device may be a mobile IAB node or a distributed unit of the mobile IAB node. The first network device may be a donor base station of the first device, or a central unit of the donor base station of the first device, or the first network device may be a CU-CP of the donor base station of the first device. This is not limited in this application. In this application, the donor base station of the first device may be understood as a donor base station that establishes an F1 interface with the first device. For ease of description, in the following embodiments, the first device is selected as a mobile IAB node, and the first network device is a donor base station of the first device. Embodiments of this application are also applicable to other cases.

FIG. 4 is a schematic flowchart of a method 400 according to an embodiment of this application. In this embodiment of this application, a first device is a mobile IAB node, a first network device is a first base station, the first network device is also a donor base station of the first device, and a second network device is a second base station.

S410: The first base station receives first information from the second base station, where the first information includes a list of information about cells managed by the second base station, the second base station is a neighboring base station of the first base station, and the list of information about cells managed by the second base station includes information about one or more cells managed by the second base station.

Specifically, the second base station may send the first information when establishing an Xn interface with the first base station.

In a possible implementation, the second base station may periodically and actively send the first information to the first base station, or the second base station may send the first information after periodically receiving a request from the second base station. The period may be pre-configured in the second base station. This is not limited in this application.

In a possible implementation, when the information about the cell managed by the second base station is updated, or when a cell managed by a neighboring base station of the second base station is updated and the second base station is notified of the update, the second base station sends first information to the first base station, where the first information includes an updated cell list.

Specifically, that a cell managed by a base station is updated may be that one or more cells are added to the base station, or one or more cells under the base station are closed, or an identifier (PCI, or CGI) of a cell under the base station is changed.

In a possible implementation, the first information further includes a list of information about cells managed by a neighboring base station (for example, a third base station) of the second base station, and the list of information about cells managed by the third base station includes information about one or more cells managed by the third base station. It may be understood that the first information includes information about a cell managed by a base station adjacent to the first base station. The adjacent base station may be a neighboring base station of the first base station, or a neighboring base station of a neighbor of the first base station. This is not limited in this application.

In this application, the neighboring base station of the first base station may be a base station that has an Xn interface with the first base station, and the neighboring base station of the second base station may be a base station that has an Xn interface with the second base station. In the first information, the information about the cell managed by the second base station or the information about the cell managed by the third base station includes a physical cell identifier PCI of the cell, and may further include at least one of the following: a cell global identifier (cell global identity, CGI), a tracking area code (tracking area code, TAC) broadcast by the cell, a radio access network area code (RAN area code, RANAC) broadcast by the cell, and a PLMN list broadcast by the cell.

S420: The first device receives a first list from the first base station.

In a possible implementation, the first list may be sent to an MT part of the first device through an RRC message.

In a possible implementation, the first list may be alternatively sent to a DU part of the first device through an F1AP message.

The first list is generated by the first base station based on the first information. The first list includes information about N first cells. The information about each first cell corresponds to one first cell. The first cell is a cell served by the first base station or the second base station. Information about each first cell includes a PCI of the first cell, and may further include at least one of the following: a cell global identifier (cell global identity, CGI) of the first cell, a TAC broadcast by the first cell, a RANAC broadcast by the first cell, and a PLMN list broadcast by the first cell. For example, the CGI of the first cell is a globally unique identifier of the first cell, and includes a PLMN identifier and a cell identifier. A CGI of a first cell in an NR (New Radio) standard is an NCGI (NR CGI), and a CGI of a first cell in an E-UTRA standard is an ECGI (E-UTRA CGI).

The cell served by the first base station may be another cell in the cell served by the first base station except a cell served by the first device.

In a possible manner, the first cell may alternatively be a cell served by the neighboring base station of the neighbor of the first base station. For example, the third base station is a neighboring base station of the second base station, and has no Xn interface with the first base station. However, information about a cell served by the third base station may also be included in the first list sent by the first base station to the first device.

In embodiments of this application, the cell served by the first base station and the cell served by the neighboring base station (the second base station or the third base station) may be configured for the first device in a same list, or may be configured for the first device in two different lists. This is not limited in embodiments of this application.

In a possible implementation, S430: The first device obtains second information from an OAM.

In a possible implementation, the second information includes a second list, and the second list is a list (or referred to as a candidate PCI list) including a group of available PCIs. Specifically, the OAM pre-configures the list of available PCIs in the first device; or the first device connects to the OAM after initial network access authentication, to obtain the list of available PCIs; or the first device obtains an updated list of available PCIs from the OAM in a movement process.

In a possible implementation, the second information includes a third list, and the third list is a list including a group of unavailable PCIs.

It should be noted that there is no sequence between S430, S410, and S420.

S440: The first device determines a PCI based on the first list.

For example, the first device determines, based on the first list, that a PCI of the cell served by the first device or a PCI of a cell configured in an initial startup process is the same as a PCI of another surrounding cell. To avoid interference, the PCI needs to be changed. For another example, in a startup process, the first device needs to determine a PCI to be used for the cell served by the first device.

In a possible implementation, when selecting an available PCI from the list of available PCIs configured by the OAM, the first device avoids a PCI included in the first list.

In a possible implementation, the first device avoids, in a whole set of PCIs, a list of unavailable PCIs provided by the OAM, avoids the PCI included in the first list, and selects one PCI from a remaining available PCI.

In embodiments of this application, a donor base station provides an information list (including PCIs) of a neighboring cell to a mobile IAB node, so that the mobile IAB node can avoid these PCIs and select a PCI having no conflict, to avoid strong interference to surrounding cells.

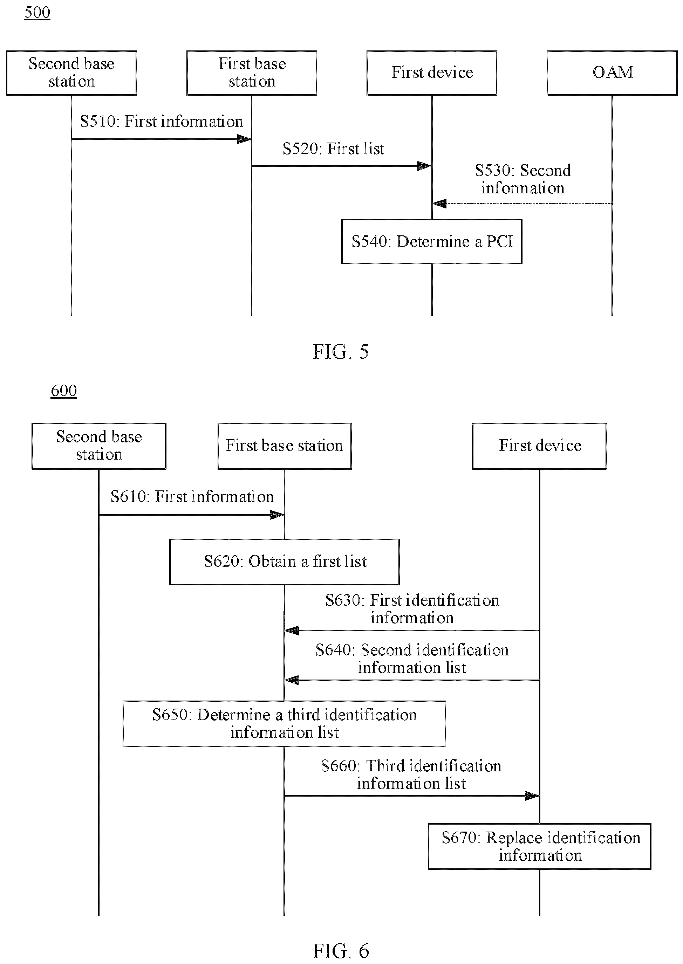

FIG. 5 is a schematic flowchart of a method 500 according to an embodiment of this application. In this embodiment of this application, a first device is a mobile IAB node, a first network device is a first base station, and a second network device is a second base station.

S510: The first base station receives first information from the second base station, where the first information includes a list of information about cells managed by the second base station, and may further include a list of information about cells managed by a neighboring base station (for example, a third base station) of the second base station. The second base station is a neighboring base station of the first base station, and the third base station is a neighboring base station of the second base station.

For specific descriptions, refer to step S410 in the method 400 in embodiments of this application. A difference from step S410 lies in that, in this embodiment of this application, in the first information, the information about the cell managed by the second base station or the information about the cell managed by the third base station further includes information that may indicate whether the cell is a cell served by the mobile IAB node. In a possible implementation, whether the cell is the cell served by the mobile IAB node may be explicitly indicated. For example, in the first information, for the cell served by the mobile IAB node, an explicit indicator, mobile IAB node indicator, may be carried in corresponding cell information. Alternatively, in the first information, a list with a separate group of cells served by the mobile IAB node are included, and all cells in the group are cells served by the mobile IAB node. For example, the first information includes a list of information about cells served by a mobile IAB node managed by the second base station, and may further include a list of information about cells served by a mobile IAB node managed by the third base station. Cells included in the two lists are cells served by the mobile IAB nodes.

In another possible implementation, the first information may implicitly indicate whether the cell is the cell served by the mobile IAB node. For example, a dedicated PCI set of the mobile IAB node or a value range of a dedicated PCI reserved for the mobile IAB node may be configured in advance for the first base station by using an OAM. In this way, the first base station can identify, based on a specific PCI value in the cell information in the first information, the cell served by the mobile IAB node.

In a possible implementation, there are also mobile IAB nodes under the second base station, and candidate PCI lists obtained by the mobile IAB nodes from the OAM are reported to the second base station through RRC messages or F1AP messages. Therefore, in information that is about cells managed by the second base station and that is provided by the second base station to the first base station, included information about cells served by the mobile IAB nodes may include all PCIs of the candidate PCI lists of the mobile IAB nodes. Similarly, serving cell information provided by the neighboring base station (for example, the third base station) of the second base station to the second base station may also include all PCIs in the candidate PCI list of the mobile IAB node connected to the third base station. Correspondingly, when the second base station provides the information about the cell managed by the neighboring base station to the first base station, all PCIs in the candidate PCI list of the mobile IAB node connected to the third base station are also included.

Further, in information about cells managed by the second base station and the neighboring base station of the second base station, which cells are cells served by a fixed IAB node (fixed IAB node), which cells are cells served by a mobile IAB node, and which cells are cells served by the base station or a DU of the base station are indicated.

S520: The first device receives a first list from the first base station.

For specific descriptions, refer to step S420 in the method 400 in embodiments of this application. A difference from S420 lies in that, the information about the first cell may further indicate whether the cell is a cell served by the mobile IAB node, and further indicate which cells are cells served by the fixed IAB node, which cells are cells served by the mobile IAB node, and which cells are cells served by the base station or the DU of the base station. For a specific indication manner, refer to S510. Details are not described herein again.

Optionally, in S530, the first device receives second information from the OAM.

For specific descriptions, refer to step S430 in the method 400 in embodiments of this application. Details are not described herein again.

S540: The first device selects a PCI based on the first list.

For specific descriptions, refer to step S440 in the method 400 in embodiments of this application. Details are not described herein again.

In this step, based on the descriptions of step S440 in the method 400, the PCI may be selected in combination of a device type of the first device. For example, if the first device is a mobile IAB node, when selecting the PCI, the first device may select, from a list of available PCIs that is configured by the OAM, a PCI that is not the same as a PCI of a cell served by the mobile IAB node in the first list. For another example, if the first device is a fixed IAB node, when selecting a PCI, the first device may select, from a list of available PCIs that is configured by the OAM, a PCI that is neither the same as a PCI of a cell served by a fixed IAB node in the first list nor the same as a PCI of a cell served by a DU of a base station in the first list.

In comparison with the method 400, in this embodiment of this application, it is ensured that a mobile IAB node does not affect a PCI of a fixed cell, and a PCI used by a mobile IAB node in a relatively large range around the mobile IAB node is indicated in advance, so that interference caused by a PCI conflict between mobile IAB nodes can be avoided as much as possible. In addition, in cell information exchanged between base stations and neighboring cell information sent by a base station serving as a donor node to the mobile IAB node, it may be further indicated that a cell is a mobile IAB cell, or a fixed IAB node cell, or a cell of a fixed base station.

FIG. 6 is a schematic flowchart of a method 600 according to an embodiment of this application. In this embodiment of this application, a first device is a mobile IAB node, a first network device is a first base station, and a second network device is a second base station.

S610: The first base station receives first information from the second base station. For specific descriptions, refer to step S410 and step S510 in the method 400 and the method 500 in embodiments of this application. Details are not described herein again.

S620: The first base station obtains a first list based on the first information. For descriptions of the first list, refer to steps S420 and S520 in the method 400 and the method 500 in embodiments of this application. Details are not described herein again.

S630: The first device sends first identification information to the first base station, where the first identification information indicates a cell served by the first device, and the first identification information may include a PCI of the cell served by the first device.

For example, in an F1 setup process, a DU part of the first device uses an F1 setup request message to carry cell information of the DU part of the first device, where the cell information includes a PCI of each cell.

In a possible implementation, the first identification information may further include at least one of a cell global identifier of the cell served by the first device, a tracking area code of the cell served by the first device, a radio access network area code of the cell served by the first device, or a public land mobile network list of the cell served by the first device.

S640: The first device may further send a second identification information list to the first base station, where the second identification information list includes one or more pieces of second identification information, the second identification information is in one-to-one correspondence with a neighboring cell detected by the first device, and the second identification information includes a physical cell identifier of the neighboring cell detected by the first device. For example, the first device is a mobile IAB node, and an MT part or a DU part of the mobile IAB node records all PCIs of cells detected during cell search or measurement, and then includes these PCIs to the second identification information list and sends the second identification information list to the first base station.

In a possible implementation, if an OAM divides a PCI range or a PCI set dedicated to the mobile IAB node, in this case, the first device may further specifically indicate, in the second identification information, a serving node type of a cell corresponding to each PCI. The serving node type is, for example, a mobile IAB node that serves the cell or a fixed node that serves the cell. The fixed node may further be indicated to a fixed IAB node or a base station or a DU of the base station. For a specific manner of indicating the serving node, refer to the descriptions in the foregoing embodiments for understanding. For example, the first device may determine, by reading a system broadcast of the neighboring cell, that a serving node type of the neighboring cell is a mobile IAB node. For example, the mobile IAB node may use a system information broadcast of a cell served by the mobile IAB node, to carry indication information indicating that the mobile IAB node is a mobile IAB node. Alternatively, the first device obtains a PCI range or a PCI set of a cell served by the mobile IAB node from the OAM, and then when detecting a PCI of a neighboring cell, if the PCI belongs to the PCI range or the PCI set of the cell served by the mobile IAB node, the first device may determine that a serving node type of the neighboring cell is the mobile IAB node.

In a possible manner, each piece of second identification information in the second identification information list further includes any one or more of the following of the neighboring cell detected by the first device: a CGI of the cell, a TAC broadcast by the cell, a PLMN identity broadcast by the cell, or a RANAC broadcast by the cell.

In a possible manner, step S640 and step S630 may be combined into one step, that is, when the first device sends the first identification information to the first base station, the second identification information list is also carried.

It should be noted that, in this embodiment of this application, a sequence of steps S640, S630, and S610 is not limited.

S650: The first base station determines a third identification information list based on the first identification information, the second identification information list, and the first list, where the third identification information list includes one or more pieces of third identification information, and the third identification information includes an available PCI selected by the first base station for the first device.

Specifically, the first base station detects, based on the first identification information, the second identification information list, and the first list, whether a PCI conflict may occur between the first device and a surrounding neighboring cell. If the PCI conflict may occur, the first base station selects, for the first device, a PCI that does not conflict with the surrounding cell, and then notifies the DU part of the first device through an F1 interface, or notifies the MT part of the first device through an RRC message. The surrounding neighboring cell herein includes a cell in the first list, a cell in the second identification information list, and a cell managed by the first base station.

For example, the first device is a mobile IAB node. If the OAM divides a dedicated PCI range or PCI set of the mobile IAB node, the first base station determines whether a PCI of a cell served by the mobile IAB node in a surrounding neighboring cell conflicts with that of a cell served by the first device, and avoids the PCI of the cell served by the neighboring mobile IAB node during reconfiguration of a PCI for the first device.

S660: The first base station sends the third identification information list to the first device, where the third identification information list includes the one or more pieces of third identification information.

In a possible manner, the first device serves a plurality of cells. When the first base station sends the third identification information list to the first device, an identifier used to indicate a cell served by the first device (for example, the first identification information, or the PCI in the first identification information, or a CGI in the first identification information) is carried, to indicate the first device to update a PCI of a specific cell. In this case, the first base station may indicate the first device to update a PCI of only a cell, of the first device, that conflicts with a surrounding neighboring cell.

For example, the first device is a mobile IAB node, there are three cells served by the first device, and PCIs corresponding to the three cells are a PCI 1, a PCI 2, and a PCI 3 respectively. The PCI 1 and the PCI 2 may conflict with PCIs of surrounding neighboring cells. Therefore, when the first base station sends the third identification information list to the first device, the PCI 1 and the PCI 2 and a third identification information list including two new PCIs (for example, a PCI 4 and a PCI 5) may be carried, to indicate the first device to replace the PCI 1 and the PCI 2 that originally identify cells with the two new PCIs. Alternatively, when the first base station sends the third identification information list to the first device, there is a third identification information list (including a PCI 4) corresponding to the PCI 1, and there is another third identification information list (including a PCI 5) corresponding to the PCI 2.

S670: The first device replaces identification information of the cell indicated by the first identification information with one piece of third identification information in the third identification information list.

For example, the first device is a mobile IAB node. When the first device receives the third identification information list from the first base station, a message sent by the first base station includes the PCI 1 and the PCI 2, and a third identification information list including two new PCIs (for example, the PCI 4 and the PCI 5). The first device may select a specific new PCI to replace the PCI 1 or the PCI 2.

In another possible example, the first device is a mobile IAB node. When the first device receives the third identification information list from the first base station, and in a message sent by the first base station, there is one third identification information list (including the PCI 4) corresponding to the PCI 1, and there is another third identification information list (including the PCI 5) corresponding to the PCI 2, the first device selects one (for example, the PCI 4) from the third identification information list corresponding to the PCI 1 to replace the PCI 1, and selects one (for example, the PCI 5) from the third identification information list corresponding to the PCI 2 to replace the PCI 2.

In embodiments of this application, the base station detects, based on obtained information about a neighboring cell and information about a cell served by the mobile IAB node, whether a PCI conflict is likely to occur, and reconfigures a PCI for the mobile IAB node, to avoid interference caused by the PCI conflict between the mobile IAB node and the surrounding cell.

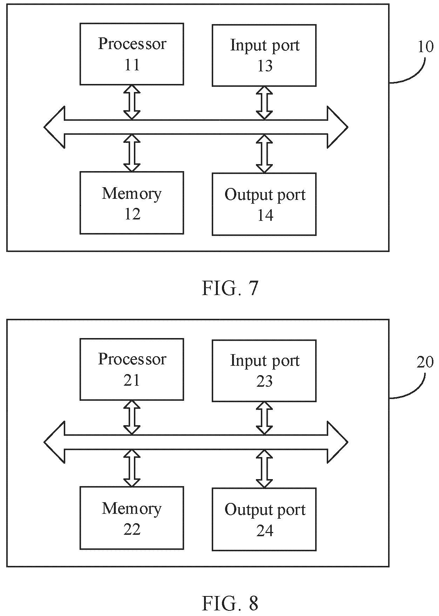

According to the foregoing method, FIG. 7 is a diagram of a communication apparatus 10 according to an embodiment of this application. As shown in FIG. 7, the apparatus 10 may be the foregoing first device, or may be a chip or a circuit, for example, a chip or a circuit that may be disposed in the first device.

The apparatus 10 may include a processor 11 (that is, an example of a processing unit) and a memory 12. The memory 12 is configured to store instructions, and the processor 11 is configured to execute the instructions stored in the memory 12, so that the apparatus 20 implements the steps performed by the first device in the methods corresponding to FIG. 4 to FIG. 6.

Further, the apparatus 10 may further include an input port 13 (an example of a communication unit) and an output port 14 (another example of the communication unit). Further, the processor 11, the memory 12, the input port 13, and the output port 14 may communicate with each other through internal connection paths, to transmit a control and/or data signal. The memory 12 is configured to store a computer program. The processor 11 may be configured to invoke the computer program from the memory 12 and run the computer program, to control the input port 13 to receive a signal, and control the output port 14 to send a signal, to implement the steps performed by the first device in the foregoing methods. The memory 12 may be integrated into the processor 11, or the memory 12 and the processor 11 may be disposed separately.

Optionally, if the apparatus 10 is the first device, the input port 13 is a receiver, and the output port 14 is a transmitter. The receiver and the transmitter may be a same physical entity or different physical entities. When the receiver and the transmitter are a same physical entity, the receiver and the transmitter may be collectively referred to as a transceiver.

Optionally, if the apparatus 10 is the chip or the circuit, the input port 13 is an input interface, and the output port 14 is an output interface.

In an implementation, it may be considered that functions of the input port 13 and the output port 14 are implemented by using a transceiver circuit or a dedicated transceiver chip. It may be considered that the processor 11 is implemented by using a dedicated processing chip, a processing circuit, a processor, or a universal chip.

In another implementation, it may be considered that the first device provided in embodiments of this application is implemented by using a general-purpose computer. To be specific, program code for implementing functions of the processor 11, the input port 13, and the output port 14 is stored in the memory 12, and a general-purpose processor implements the functions of the processor 11, the input port 13, and the output port 14 by executing the code in the memory 12.

The functions and actions of the modules or the units of the communication apparatus 10 that are enumerated above are only examples for description. The modules or the units of the communication apparatus 10 may be configured to perform the actions or the processing processes performed by the first device in the foregoing methods 400 to 600. Herein, to avoid repetition, detailed descriptions thereof are omitted.

For concepts, explanations, detailed descriptions, and other steps that are related to the apparatus 10 and the technical solutions provided in embodiments of this application, refer to the descriptions of the content in the foregoing methods or other embodiments. Details are not described herein again.

According to the foregoing method, FIG. 8 is a diagram of a communication apparatus 20 according to an embodiment of this application. As shown in FIG. 8, the apparatus 20 may be a network device (for example, the foregoing first base station), or may be a chip or a circuit, for example, a chip or a circuit that may be disposed in the network device. The network device corresponds to the network device (for example, the foregoing first base station) in the foregoing methods.

The apparatus 20 may include a processor 21 (an example of a processing unit) and a memory 22. The memory 22 is configured to store instructions, and the processor 21 is configured to execute the instructions stored in the memory 22, so that the apparatus 20 implements the steps performed by the network device (for example, the first base station) in the methods corresponding to FIG. 4 to FIG. 6.

Further, the apparatus 20 may further include an input port 23 (an example of a communication unit) and an output port 23 (another example of the processing unit). Further, the processor 21, the memory 22, the input port 23, and the output port 24 may communicate with each other through internal connection paths, to transmit a control and/or data signal. The memory 22 is configured to store a computer program. The processor 21 may be configured to invoke the computer program from the memory 22 and run the computer program, to control the input port 23 to receive a signal, and control the output port 24 to send a signal, to complete the steps of the network device in the foregoing methods 400 to 600. The memory 22 may be integrated into the processor 21, or may be disposed separately from the processor 21.

Optionally, if the apparatus 20 is a network device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver.

Optionally, if the apparatus 20 is the chip or the circuit, the input port 23 is an input interface, and the output port 24 is an output interface.

Optionally, if the apparatus 20 is the chip or the circuit, the apparatus 20 may not include the memory 22, and the processor 21 may read instructions (a program or code) in a memory outside the chip to implement the functions of the network device in the foregoing methods corresponding to FIG. 4 to FIG. 6.

In an implementation, it may be considered that functions of the input port 23 and the output port 24 are implemented by using a transceiver circuit or a dedicated transceiver chip. It may be considered that the processor 21 is implemented by using a dedicated processing chip, a processing circuit, a processor, or a universal chip.

In another implementation, it may be considered that the network device provided in embodiments of this application is implemented by using a general-purpose computer. To be specific, program code for implementing functions of the processor 21, the input port 23, and the output port 24 is stored in the memory, and a general-purpose processor implements the functions of the processor 21, the input port 23, and the output port 24 by executing the code in the memory.

The modules or the units of the communication apparatus 20 may be configured to perform the actions or the processing processes performed by the network device in the foregoing methods 400 to 600. Herein, to avoid repetition, detailed descriptions thereof are omitted.

For concepts, explanations, detailed descriptions, and other steps that are related to the apparatus 20 and the technical solutions provided in embodiments of this application, refer to the descriptions of the content in the foregoing method, or other embodiments. Details are not described herein again.

According to the method provided in embodiments of this application, an embodiment of this application further provides a communication system, and the communication system includes the foregoing network device and one or more user equipments.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that serial numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, and comprising:
receiving a first list from a first network device, wherein the first list comprises information about N first cells, the information about the N first cells is in one-to-one correspondence with the N first cells, information about each first cell comprises a physical cell identifier of the corresponding first cell, the first cell is a cell served by the first network device or a second network device, the second network device is a neighboring network device of the first network device, the first device is a distributed unit of a base station, the first network device is a central unit of the base station, and N is an integer greater than or equal to 1; and
determining first identification information based on the first list, wherein the first identification information indicates a cell served by the first device, and the first identification information is not comprised in the first list.

2. The method according to claim 1, wherein the first device is a distributed unit of a mobile IAB node, and the first network device is a central unit of a donor base station of the mobile IAB node.

3. The method according to claim 1 or 2, wherein the information about the first cell further comprises at least one of the following:
a cell global identifier of the first cell, a tracking area code of the first cell, a radio access network area code of the first cell, and a public land mobile network list of the first cell.

4. The method according to any one of claims 1 to 3, wherein the first identification information comprises:
a physical cell identifier of the cell served by the first device.

5. The method according to any one of claims 1 to 4, wherein the determining first identification information based on the first list comprises:
obtaining a second list, wherein the second list comprises one or more pieces of identification information that are capable of being used by the first device; and
selecting the first identification information from the second list.

6. The method according to any one of claims 1 to 5, wherein the determining first identification information based on the first list comprises:
obtaining a third list, wherein the third list comprises one or more pieces of identification information that are incapable of being used by the first device; and
determining the first identification information, wherein the first identification information is neither comprised in the third list nor comprised in the first list.

7. The method according to any one of claims 1 to 6, wherein the information about the first cell further indicates a type of a device serving the first cell.

8. The method according to claim 7, wherein the type of the device serving the first cell comprises at least one of the following:
a mobile IAB node, a fixed IAB node, and a fixed base station.

9. A communication method, applied to a first network device, and comprising:
obtaining information about N first cells, wherein the information about the N first cells is in one-to-one correspondence with the N first cells, information about each first cell comprises a physical cell identifier of the first cell, the first cell is a cell served by the first network device or a second network device, the second network device is a neighboring network device of the first network device, and N is an integer greater than or equal to 1; and
sending a first list to a first device, wherein the first list comprises the information about the N first cells, the first device is a distributed unit of a base station, and the first network device is a central unit of the base station.

10. The method according to claim 9, wherein the first device is a distributed unit of a mobile IAB node, and the first network device is a central unit of a donor base station of the mobile IAB node.

11. The method according to claim 9 or 10, wherein the information about the first cell further comprises at least one of the following:
a cell global identifier of the first cell, a tracking area code of the first cell, a radio access network area code of the first cell, and a public land mobile network list of the first cell.

12. The method according to any one of claims 9 to 11, wherein the information about the first cell further indicates a type of a device serving the first cell.

13. The method according to claim 12, wherein the type of the device serving the first cell comprises at least one of the following:
a mobile IAB node, a fixed IAB node, and a fixed base station.

14. A communication method, applied to a first device, and comprising:
sending first identification information to a first network device, wherein the first identification information indicates a cell served by the first device, the first device is a distributed unit of a base station, and the first network device is a central unit of the base station;
sending a second identification information list to the first network device, wherein the second identification information list comprises one or more pieces of second identification information, each piece of second identification information corresponds to one neighboring cell detected by the first device, and the second identification information comprises a physical cell identifier of the neighboring cell detected by the first device;
receiving a third identification information list from the first network device, wherein the third identification information list comprises one or more pieces of third identification information; and
replacing identification information of the cell indicated by the first identification information with one piece of third identification information in the third identification information list.

15. The method according to claim 14, wherein the first device is a distributed unit of a mobile IAB node, and the first network device is a central unit of a donor base station of the mobile IAB node.

16. The method according to claim 14 or 15, wherein the first identification information and the third identification information comprise:
a physical cell identifier of the cell served by the first device.

17. A communication method, applied to a first network device, and comprising:
receiving first identification information from a first device, wherein the first identification information indicates a cell served by the first device, and the first device is a distributed unit of a base station;
receiving a second identification information list from the first device, wherein the second identification information list comprises one or more pieces of second identification information, each piece of second identification information corresponds to one neighboring cell detected by the first device, and the second identification information comprises a physical cell identifier of the neighboring cell detected by the first device;
obtaining a first list, wherein the first list comprises information about N first cells, the information about the N first cells is in one-to-one correspondence with the N first cells, information about each first cell comprises a physical cell identifier of the first cell, the first cell is a cell served by the first network device or a second network device, the second network device is a neighboring network device of the first network device, the first network device is a central unit of the base station, and N is an integer greater than or equal to 1;
determining a third identification information list based on the first list, the second identification information list, and the first identification information; and
sending the third identification information list to the first device, wherein the third identification information list comprises one or more pieces of third identification information, and the one or more pieces of third identification information identify the cell served by the first device.

18. The method according to claim 17, wherein the first device is a distributed unit of a mobile IAB node, and the first network device is a central unit of a donor base station of the mobile IAB node.

19. The method according to claim 18, wherein the information about the first cell further comprises at least one of the following:
a cell global identifier of the first cell, a tracking area code of the first cell, a radio access network area code of the first cell, and a public land mobile network list of the first cell.

20. The method according to any one of claims 17 to 19, wherein the first identification information and the third identification information comprise:
a physical cell identifier of the cell served by the first device.

21. The method according to any one of claims 17 to 20, wherein the determining a third identification information list based on the first list, the second identification information list, and the first identification information comprises:
if the first identification information is comprised in the first list or the second identification information list, determining, by the first network device, the third identification information list for the first device, wherein the third identification information in the third identification information list is not comprised in the first list or the second identification information list.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 21.

23. A communication system, comprising:
a first device, configured to perform the method according to any one of claims 1 to 8 or claims 14 to 16; and
a first network device, configured to perform the method according to any one of claims 9 to 13 or claims 17 to 21.

24. A chip, comprising a processor, configured to invoke a computer program from a memory and run the computer program, to enable a terminal device on which the chip is installed to perform the method according to any one of claims 1 to 21.

25. A computer program, wherein when the computer program is executed by a communication apparatus, the method according to any one of claims 1 to 21 is implemented.

26. A computer-readable storage medium, wherein the computer-readable storage medium stores a computer program; and when the computer program is run, a computer is enabled to perform the method according to any one of claims 1 to 21.
